# EUROPÄISCHE PATENTSCHRIFT

(11) **EP 1 336 032 B1**
(45) Veröffentlichungstag und Bekanntmachung des Hinweises auf die Patenterteilung: **18.10.2006**
(21) Anmeldenummer: 01997626.5
(22) Anmeldetag: 20.11.2001
(51) Int. Cl.: F01N 3/027, F01N 3/20, B01D 53/92, F01N 3/035, F01N 9/00

(54) **VERFAHREN ZUR VERMINDERUNG KOHLENSTOFFHALTIGER PARTIKELEMISSIONEN VON DIESELMOTOREN UND ZUGEHÖRIGE ANORDNUNG**
METHOD FOR REDUCING PARTICLE EMISSIONS CONTAINING CARBON OF DIESEL MOTORS AND A CORRESPONDING SYSTEM
PROCEDE DE REDUCTION D'EMISSIONS DE PARTICULES CARBONEES DE MOTEURS DIESEL ET DISPOSITIF CORRESPONDANT

(30) Priorität: 21.11.2000 DE 10057862; 22.06.2001 DE 10130163
(43) Veröffentlichungstag der Anmeldung: 20.08.2003
(73) Patentinhaber: SIEMENS AKTIENGESELLSCHAFT, 80333 München (DE)
(72) Erfinder: HAMMER, Thomas, 91334 Hemhofen (DE); KISHIMOTO, Tetsuo, 91056 Erlangen (DE); BIRCKIGT, Rudolf, 91077 Neunkirchen (DE)
(86) Internationale Anmeldenummer: PCT/DE2001/004347
(87) Internationale Veröffentlichungsnummer: WO 2002/042615

(56) Entgegenhaltungen:
- EP-A- 0 332 609
- WO-A-00/43102
- WO-A-99/38603
- DE-A- 4 303 586
- DE-C- 19 717 890
- PATENT ABSTRACTS OF JAPAN vol. 018, no. 465 (M-1665), 30. August 1994 (1994-08-30) & JP 06 146852 A (SENICHI MASUDA), 27. Mai 1994 (1994-05-27)
- PATENT ABSTRACTS OF JAPAN vol. 1998, no. 04, 31. März 1998 (1998-03-31) & JP 09 329015 A (HOSOKAWA SHUNSUKE), 22. Dezember 1997 (1997-12-22)
- PATENT ABSTRACTS OF JAPAN vol. 016, no. 406 (C-0978), 27. August 1992 (1992-08-27) & JP 04 135619 A (AGENCY OF IND SCIENCE & TECHNOL), 11. Mai 1992 (1992-05-11)
- "Plasma Exhaust Treatment" DIESELNET, [Online] Dezember 2000 (2000-12), Seiten 1-15, XP002196022 Gefunden im Internet: <URL:http://www.dieselnet.com/tech/plasma. html> [gefunden am 2001-10-29]
- PATENT ABSTRACTS OF JAPAN vol. 007, no. 252 (C-194), 9. November 1983 (1983-11-09) & JP 58 137425 A (NIPPON TOKUSHU TOGYO KK), 15. August 1983 (1983-08-15)
- 'PLASMA EXHAUST TREATMENT' DIESELNET TECHNOLOGY GUIDE, [Online] 1999, Seiten 1 - 7, XP000826895 Gefunden im Internet: <URL:www.dieselnet.com>

## Beschreibung

Die Erfindung bezieht sich auf ein Verfahren zur Verminderung kohlenstoffhaltiger Partikelemissionen von Dieselmotoren, wobei das vom Motor emittierte Abgas durch ein Filter strömt, die im Abgas enthaltenen Partikel an Filteroberflächen abgeschieden und wobei zwecks Regeneration des Filters die abgeschiedenen Partikel oxidiert werden. Daneben bezieht sich die Erfindung auch auf eine zugehörige Anordnung zur Durchführung des Verfahrens, mit einem keramischen Rußfilter und Mitteln zur Oxidation der am keramischen Filter abgeschiedenen Partikel.

Lungengängiger Ruß ist nach aktuellen Erkenntnissen gesundheitsschädlich, evtl. sogar karzinogen. Gerade die aus Gründen der Kraftstoffökonomie interessanten direkteinspritzenden Pkw-Diesel-Motoren emittieren jedoch lungengängige Partikel.

Eine seit längerem vorgeschlagene Lösung des Problems könnte in regenerierbaren Partikelfiltern bestehen, die jedoch zur Regeneration bei niedrigen Abgastemperaturen ein Additiv wie z.B. Cer, Na-Sr-Gemisch oder Fe-Sr-Gemisch im Kraftstoff benötigen, das als Katalysator für die Rußoxidation wirkt (FR 2 771 449 A). Solche Katalysatoren wirken z.B. dadurch, dass sie erst selbst oxidiert werden und den Sauerstoff dann an den Ruß übertragen.

Im praktischen Einsatz werden die Oxide durch den Ruß jedoch nur teilweise reduziert, so dass im langfristigen Betrieb das Problem der Filterbeladung mit Katalysatorasche auftritt. Zusätzliche Probleme ergeben sich bei schwefelhaltigen Kraftstoffen durch katalytisch geförderte Sulfatbildung. Weiterhin kann im Stadtverkehr das Problem auftreten, dass die Abgastemperatur trotz katalytischem Additiv für eine Regeneration nicht ausreicht.

Eine rein thermische Regeneration hingegen scheidet aus, da dafür kurzzeitig Betriebspunkte des Motors mit stark erhöhter Abgastemperatur gefahren oder elektrische Maßnahmen zur Aufheizung des Filters getroffen werden müssen. Die EP 0 635 625 A1 offenbart zu diesem Zweck eine Mikrowellenheizung der Filterkeramik, EP 0 731 875 einen elektrisch beheizten Oxidationskatalystor zum Rußabbau. Jede dieser rein thermischen Maßnahmen ist mit einem stark erhöhten durchschnittlichen Kraftstoffverbrauch verbunden. Zusätzlich kann es bei der durch diese Maßnahmen ausgelösten Verbrennung des Rußes lokal zu einem Durchbrennen des Rußfilters und damit zu seiner Zerstörung kommen.

Durch Kombination dieser beiden Maßnahmen kann eine Verbesserung erreicht werden, die jedoch nicht das Problem löst, dass sich der Filter mit Katalysator-Aschen zusetzt. Weiterhin kann es unter extremen Umständen (Kurzstrecken-Fahrten im Stadtverkehr) immer noch zu so niedrigen Abgas-Temperaturen kommen, dass eine Regeneration des Filters trotzdem nicht möglich ist.

Zur Lösung der Probleme mit Rußemissionen sind in der Vergangenheit mehrfach Plasmaverfahren vorgeschlagen oder untersucht worden, die sich folgendermaßen klassifizieren lassen:
(a) Partikel werden durch Behandlung mit einer Sprühentladung elektrisch geladen, elektrostatisch abgeschieden und auf dem Substrat durch Plasmaverfahren, evtl. unter Zusatz eines Katalysators im Kraftstoff oder im Substrat, oxidiert (EP 0 332 609 B1, WO91/03631 A1, US 4,979,364 A; EP 0 627 263 A1, DE 2 146 228 A1).
(b) Partikel werden durch Behandlung mit einer Sprühentladung agglomeriert und durch einen Zylkon abgeschieden (DE 34 24 196 A1 und EP 0 824 376 A1), wo sie z.B. thermisch entsorgt werden.
(c) Partikel werden in einem dielektrischen Festbett aus einem Granulat, in einem Faserverbund (Filz) oder in einem porösen Material (Keramikschaum o.a.) als Filter abgeschieden. In dieser porösen Struktur wird ein nichtthermisches Plasma gebrannt, das die Oberflächen kontinuierlich regeneriert (WO 99/38603 A1).
(d) Eine plasmainduzierte Regeneration von Rußfiltern kann auch dadurch erreicht werden, dass in einem nichtthermischen Plasma NO zu NO₂ oxidiert wird, das schon bei niedrigen Temperaturen unter Oxidation des Rußes wieder zu NO reduziert wird. Bei ausreichenden Abgastemperaturen kann statt des Plasmas auch ein Oxidationskatalysator verwendet werden (DE 198 26 831 A1 sowie EP 341 832 B1).
(e) Partikel werden durch Trägheitskräfte auf Strukturelektroden eines DBE-Reaktors (DBE - dielektrisch behinderte Entladungen) abgeschieden und dort durch nichtthermische Plasmaeinwirkung oxidiert (DE 100 07 130 A0) .
(f) Partikel werden beim Durchströmen einer als Filter wirkenden porösen Keramik zurückgehalten und durch Einwirkung eines DBE-Plasmas oxidiert (DE 197 17 890 A1). Das DBE-Plasma wird erfindungsgemäß zwischen einer mit einer Barriereschicht versehene Gegenelektrode und einer mit der Filterkeramik verbundenen gasdurchlässigen Elektrode oder einer Filterkeramik hinreichender elektrischer Leitfähigkeit als Elektrode gebildet.

Zu diesen Verfahren ist folgendes anzumerken:
Ad a) Die elektrostatische Abscheidung von Partikeln erfordert zwei Plasmareaktoren - einen ersten zur elektrischen Aufladung der Partikel proportional zu ihrer Masse, und einen zweiten zur elektrostatischen Abscheidung sowie katalytischen oder plasmainduzierten Oxidation. In einem kraftfahrzeugtauglichen, kompakten Aufbau lässt sich diese Funktion nicht sicher gewährleisten. Es besteht die Gefahr unkontrollierter Abscheidung der Partikel an Stellen im Abgasstrang, an denen ihre Oxidation nicht gewährleistet ist. Damit kann es zu schlagartiger, unkontrollierter Freisetzung großer Partikelmengen kommen (re-entrainment).
Ad b) Auch bei der elektrostatischen Agglomeration kann nicht gewährleistet werden, dass die Partikel hinterher kontrolliert abgeschieden werden. Damit ergibt sich die gleiche Problematik wie bei der elektrostatischen Abscheidung in (a).
Ad c) Die Rußabscheidung in kontinuierlich plasmaregenerierten porösen Strukturen zeigt gute Wirkung. Hier ergeben sich jedoch Probleme mit der mechanischen Standfestigkeit der porösen Struktur im Kraftfahrzeugeinsatz (Granulat, Fasermaterial) oder mit dem Staudruck (Keramikschäume).
Ad d) Die kontinuierliche Rußfilterregeneration durch ein vorgeschaltetes Plasma arbeitet im Prinzip, erfordert aber die Anwesendheit ausreichender NO-Mengen im Abgas und ist energetisch unvorteilhaft (B.M. Penetrante et al.: Feasibility of Plasma Aftertreatment for Simultaneous Control of NOx and Particulates; SAE paper no 1999-01-3637).
Ad e) Aufgrund der Durchgängigkeit der Elektrodenstruktur für das Abgas ergibt sich zwar ein niedriger Staudruck, und ein Zusetzen des Abgasreinigungselementes durch feste Ablagerungen ist nicht zu erwarten. Da jedoch Trägheitskräfte mit sinkender Masse abnehmen, folgen leichte Partikel weitgehend der Gasströmung und werden deshalb unzureichend abgeschieden.
Ad f) Bei dielektrisch behinderten Entladungen wird ein wesentlicher Teil der Leistung im Volumen umgesetzt. Der Rest der elektrischen Leistung kann auf elektrisch isolierenden Oberflächen wie der dielektrischen Beschichtung im sogenannten Fußpunkt des sich bei Atmosphärendruck ausbildenden Entladungsfilamentes umgesetzt werden. Im Falle einer elektrisch leitfähigen porösen Filterkeramik bildet sich ein solcher Fußpunkt deshalb nur auf dem Dielektrikum der gasundurchlässigen Gegenelektrode aus. Bekanntermaßen haben chemisch aktive Radikale wie der aus Luftsauerstoff gebildete atomare Sauerstoff O und das aus Wasser gebildete Hydroxyl-Radikal OH in Abgas eine sehr kurze Lebensdauer von unter 200 *µ*s. Dadurch besteht nur eine geringe Wahrscheinlichkeit, dass im Volumen gebildete Radikale den auf der Filterkeramik abgeschiedenen Ruß oxidieren. Dies reduziert den Wirkungsgrad der Plasmaregeneration. Außerdem engen die vorgeschlagenen Elektrodengeometrien den Strömungsquerschnitt der einzelnen Filterkanäle stark ein. Um den Staudruck des plasmaregenerierten Filters niedrig zu halten, ist gegenüber Filtern ohne diese Elektrodenstrukturen eine Vergrößerung des Volumens erforderlich.

Über obigen Stand der Technik hinaus ist aus der JP 6-146852 A ein Verfahren zur Oxidation von Dieselruß bei niedrigen Temperaturen bekannt, bei dem der abgeschiedene Ruß mittels einer dielektrisch behinderten Entladung "silent barrier discharge") umgewandelt wird. Speziell im Dokument XP 000826895 (www.dieselnet.com, Fassung von 1999) wird die Verwendung von nichtthermischen Plasmen bei der Abgasreinigung erwähnt und werden in diesem Zusammenhang die unterschiedlichen Phänomene der nichtthermischen Entladungen zusammengestellt.

Ausgehend vom Stand der Technik ist es Aufgabe der Erfindung, ein Verfahren und eine zugehörige Anordnung anzugeben, mit denen die Partikelemissionen von Dieselmotoren wirksamer als bisher unschädlich gemacht werden.

Die Aufgabe ist erfindungsgemäß bei einem Verfahren der eingangs genannten Art durch die Maßnahmen des Patentanspruches 1 gelöst. Zugehörige Weiterbildungen sind Gegenstand der abhängigen Ansprüche. Eine Anordnung zur Durchführung des erfindungsgemäßen Verfahrens ist Gegenstand des Patentanspruches 15. Diesbezügliche Weiterbildungen der Anordnung sind in den abhängigen Sachansprüchen angegeben.

Im Folgenden wird sowohl in der Beschreibung als auch in den Ansprüchen der Terminus Technikus "nichtthermische Oberflächengleitentladung" verwendet. Wenn nicht ausdrücklich anders gesagt ist auch mit den Begriffen "Oberflächengleitentladung" und "Gleitentladung" dieser Terminus gemeint. Er soll zur Abgrenzung zu anderen Formen elektrischer Gasentladungen hier näher definiert werden: Bei der "nichtthermischen Oberflächengleitentladung" handelt es sich im Folgenden
- um eine im Kontakt mit einer i.a. elektrisch isolierenden (oder nur schwach leitfähigen) Oberfläche brennenden elektrische Gasentladung
- zur Erzeugung eines "nichtthermischen Plasmas"
- unter weitgehender Vermeidung einer Gasaufheizung.

Das "nichtthermische Plasma" hebt sich vom "thermischen Plasma" dadurch ab, dass der Plasmazustand thermodynamisch nicht durch eine Temperatur beschrieben werden kann und dass die mittlere Energie der Elektronen wesentlich größer ist als die der Schwerteilchen (Ionen, Atome, Moleküle). Bei Atmosphärendruck lassen sich nichtthermische Plasmen z.B. durch elektrische Gasentladungen erzeugen, bei denen die Energie-Einkopplung auf sehr kurze Zeiten begrenzt ist. Dadurch können Elektronen Moleküle ionisieren, elektronisch anregen und spalten (dissoziieren), ohne dass dabei die Gastemperatur nennenswert erhöht wird. Oberflächengleitentladungen brennen bei Atmosphärendruck häufig als Funken, bei denen jedoch Brenndauer und Leistungsdichte so hoch sind, dass schon substantielle Gasaufheizung auftritt. Diese Form der Oberflächengleitentladung ist hier explizit ausgeschlossen.

Mit der Erfindung wird ein Verfahren vorgeschlagen, das die Abscheidung von Ruß durch keramische Rußfilter kombiniert mit der Regeneration der Filter durch nichtthermische Oberflächengleitentladungen. Die dem Stand der Technik entsprechenden keramischen Rußfilter gewährleisten bekanntermaßen einen hohen Abscheidewirkungsgrad auch feiner Partikel. Durch die Oberflächengleitentladungen wird die elektrische Energie in unmittelbarer Nähe zum abgeschiedenen Ruß für die Bildung oxidierender Radikale eingesetzt. Dadurch ergibt sich eine hohe Reaktionswahrscheinlichkeit für diese Radikale mit dem Ruß und somit auch ein hoher energetischer Wirkungsgrad.

Die für das erfindungsgemäße Verfahren erforderlichen Elektrodenstrukturen lassen sich (a) beide in die Filterwände einbetten, (b) auf gegenüberliegenden Seiten der Filterwände als Oberflächenelektrode anbringen, (c) wechselweise als eingebettete und als Oberflächenelektrode gestalten. Dies ermöglicht einen niedrigen Strömungswiderstand bei kompaktem Aufbau des Filterelementes.

Die Filterwände bestehen erfindungsgemäß aus einem feinporigen keramischen Material niedriger elektrischer Leitfähigkeit. Dadurch wirkt die Filterwand als dielektrische Barriere, die einen direkten Stromfluss unterbindet. Deshalb wird ein Betrieb mit einer zeitlich veränderlichen Hochspannung entweder in Form einer Wechselspannung oder in Form einer zeitlich repetierenden Impulsspannung vorgeschlagen. Die in Oberflächengleitentladungen umgesetzte mittlere elektrische Leistung ergibt sich aus dem Produkt E_{dis} x f von pro Puls oder pro Periode dissipierter elektrischer Energie E_{dis} und Pulswiederholrate oder Frequenz f. Die dissipierte Energie E_{dis} steigt mit steigender Spannungsamplitude U₀. Die Impulsspannung ist dadurch gekennzeichnet, dass die Dauer des Spannungsimpulses klein gegenüber der durch die Pulsrepetitionsfrequenz gegebenen Periode ist. Dadurch wird die Energie gezielt in die Erzeugung nichtthermischer Oberflächengasentladungen eingekoppelt und die übermäßige Dissipation elektrischer Energie durch die Restleitfähigkeit der Filterkeramik und durch leitfähige Rußbeläge des Filters vermieden.

Die Elektrodenstrukturen lassen sich durch Einbettung von Drähten aus duktilen Materialien wie Kupfer oder Nickel bei der Produktion des Filters erzeugen. Zur Vermeidung von energiereichen Funkenüberschlägen durch die poröse Filterkeramik können die Elektrodendrähte mit einer Barrierenschicht aus Glas, Emaille oder dicht gesinterter Keramik überzogen sein. Eine Alternative zur Erzeugung von Elektrodenstrukturen besteht in der lokalen Dotierung der Filterkeramik mit Zusätzen zur Erhöhung der elektrischen Leitfähigkeit. Die Kontaktierung der einzelnen Elektroden erfolgt für die Verbindung mit elektrischer Masse und Hochspannung jeweils von gegenüberliegenden Enden des Filters. Sie kann zum Beispiel durch gitterförmige Verbindung der Elektroden aber auch durch eine lochblechartige Kontaktplatte erfolgen, die die eingangs- und ausgangsseitigen Öffnungen der Filterzellen freilässt.

Die Plasmaregeneration des Filters kann kontinuierlich erfolgen. Die erforderliche mittlere Plasmaleistung wird durch eine mit steigender Filtertemperatur fallende, mit steigender Rußemission steigende Funktion repräsentiert. Statt der Rußemission kann der Abgasgegendruck als Eingangsgröße für die Regelung der mittleren Plasmaleistung verwendet werden. Der Vorteil dieser Methode besteht darin, dass der Abgasgegendruck kontinuierlich niedrig gehalten werden kann. Dadurch wird der Kraftstoffmehrverbrauch, der bei Verbrennungskraftmaschinen durch steigenden Abgasgegendruck auftreten kann, weitgehend vermieden. Auf der anderen Seite ergibt sich dadurch ein erhöhter Energieaufwand für den Betrieb des Plasmas. Der Energiegehalt von Kohlenwasserstoffen und Ruß wird praktisch nicht für die Regeneration genutzt.

Eine Alternative besteht deshalb in einer zyklischen Plasmaregeneration. Als Kriterium für die Auslösung und die zur Regeneration eingesetzte Plasmaleistung werden Abgasgegendruck und Filtertemperatur benutzt.

Um den mittleren Energieaufwand für die Plasmaregeneration zu begrenzen, ist die Dotierung der Filterkeramik mit katalytische Materialien vorgesehen, die die Oxidation von Ruß und Kohlenwasserstoffen fördern. Hier kommen Edelmetalle wie Pt, Metalle wie Fe und Erdalkalimetalle wie Ca in Frage. Auch hier können zwei verschiedene Regenerationsstrategien benutzt werden. Bei kontinuierlicher Plasmaregeneration ergibt sich abhängig von der Temperatur eine mehr oder weniger stark reduzierte elektrische Leistung im Vergleich zur Rußoxidation im nichtkatalytischen Fall . Im Falle zyklischer Regeneration ist eine Plasmaregeneration dann erforderlich, wenn die Filtertemperatur für längere Zeit unterhalb dem für katalytische Regeneration erforderlichen Wert bleibt.

Die Plasmaregeneration von Rußfiltern kann weiterhin mit Maßnahmen zur Förderung der selektiven katalytischen Reduktion von Stickoxiden mit ammoniakhaltigen Reduktionsmitteln kombiniert werden. Dazu wird die Elektrodenstruktur so gestaltet, dass auf der Ausgangsseite des Filters dielektrisch behinderte Volumenentladungen anstelle von Oberflächenentladungen brennen. Die dielektrisch behinderten Entladungen konvertieren NO teilweise zu NO₂, das die selektive katalytische Reduktion von NO bei niedrigen Temperaturen unter 200 °C induziert.

Weiterhin kann durch Wahl der katalytischen Dotierung des Filtermaterials die plasmainduzierte katalytische Reduktion von Stickoxiden durch kohlenwasserstoffhaltige Reduktionsmittel im Rußfilter selbst ermöglicht werden. Die Regelstrategie für den Plasmabetrieb ist in beiden Fällen zusätzlich an die Erfordernisse der NOx-Reduktion anzupassen.

Weitere Einzelheiten und Vorteile der Erfindung ergeben sich aus der nachfolgenden Figurenbeschreibung von Ausführungsbeispielen in Verbindung mit den Patentansprüchen. Es zeigen jeweils in schematischer Darstellung
- Figur 1: zwei Schnitte eines Partikelrußfilters gemäß dem Stand der Technik,
- Figur 2: bis Figur 4 drei verschiedene Möglichkeiten zur Erzeugung von Oberflächengleitentladungen auf Keramik,
- Figur 5: Schnitte einer Anordnung gemäß Figur 1, die mit Mitteln zur Ausbildung der Oberflächengleitentladungen versehen sind,
- Figur 6: eine graphische Darstellung zur Verdeutlichung des Wirkungsgrades,
- Figur 7: bis Figur 12 Schnitte bzw. Ausschnitte von Filterstrukturen mit geeigneten Elektroden zur Ausbildung von Oberflächengleitentladungen, die
- Figur 13: im Querschnitt einen Partikelfilter mit entsprechenden Strukturen , wobei eine zugehörige Steuereinrichtung vorhanden ist,
- Figur 14: einen Partikelfilter gemäß Figur 13 in Kombination mit einem Reaktor zur Durchführung einer selektiven katalytischen Reduktion (SCR) und
- Figur 15: eine graphische Darstellung zur Auswahl der Spannung für die Gleitentladung als Funktion von Abgasparametern.

Gleiche bzw. gleichwirkende Teile haben gleiche bzw. sich entsprechende Bezugszeichen. Die Figuren werden teilweise gemeinsam beschrieben.

Dem nachfolgend beschriebenen Verfahren zur Verringerung der Partikelemission liegen folgende Vorstellungen zugrunde:
- Um einen effizienten Abbau durch Oxidation zu gewährleisten, muss der Ruß auf Oberflächen gesammelt werden. Am sichersten wird dies durch die vom Stand der Technik bekannten Rußfilter gewährleistet.
- Eine auch bei niedriger Temperatur effiziente Oxidation kann ohne Zusatz katalytischer Additive nur durch oxidierende Radikale erreicht werden, die in unmittelbarer Nähe der Oberfläche gebildet werden. Das kann durch Elektronenstöße z.B. mit Sauerstoff in einem nichtthermischen Plasma mit gutem Wirkungsgrad induziert werden:

   O₂ + e → O + O + e (1)

Die Sauerstoffradikale reagieren mit der Kohlenstoffoberfläche C(s) und bilden dabei oberflächengebundenes Kohlenmonoxid:

O + C(s) → CO(s) (2)

Das Kohlenmonoxid kann freigesetzt werden

CO(s) → CO (2a),

aber auch mit einem weiteren Radikal zu Kohlendioxid reagieren:

CO(s) + O → CO₂ (3)

Wenn die Radikale in zu großem Abstand zur Oberfläche erzeugt werden, reagieren sie mit Bestandteilen RX des Abgases (wie z.B. Kohlenwasserstoffen)

RX + O → RO + X (4),

bevor sie die Oberfläche erreichen und leisten damit keinen oder nur einen indirekten, stark von der Abgaszusammensetzung abhängigen Beitrag zum Rußabbau.
- Der effizienteste Weg zur Erzeugung nichtthermischer Gasentladungen mit den geforderten Eigenschaften besteht in Oberflächengleitentladungen. Feste, in die Filterkeramik integrierte Elektrodenstrukturen bieten dabei wesentliche Vorteile gegenüber separaten Elektroden oder Schüttbettanordnungen: Sie haben mechanische Stabilität, sind strömungstechnisch günstig und damit kompakt aufbaubar.

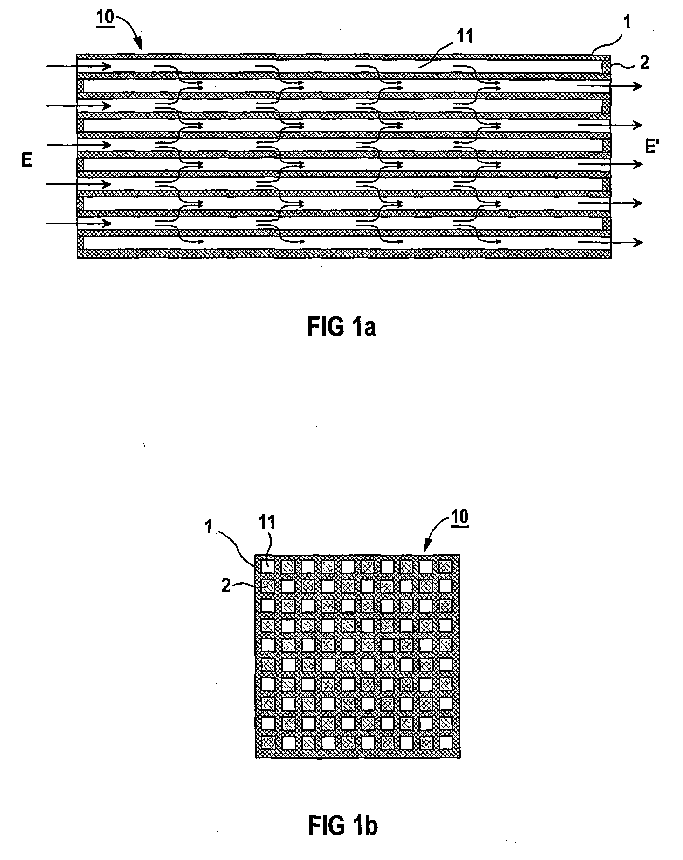

In Figur 1a ist ein dem Stand der Technik entsprechender Rußfilter 10 im Längsschnitt, in Figur 1b im Querschnitt dargestellt. Der Filter 10 besteht aus Zellen 11 mit Wänden 1 aus offenporigem keramischem Material, die jeweils wechselseitig an einem der Enden durch eine keramische Abdeckung 2 verschlossen sind. Das Abgas E (Exhaust) strömt durch die Seitenwände der Zellen. Der Ruß wir dabei auf der Oberfläche abgeschieden.

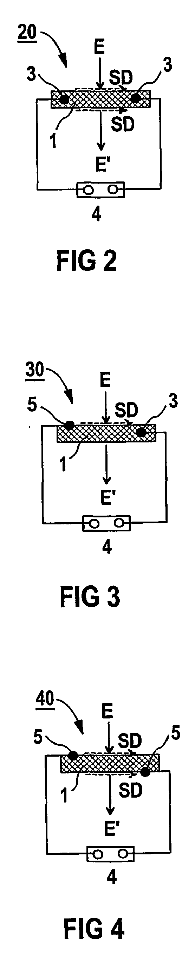

Figur 2 verdeutlicht das oben beschriebene Verfahren anhand einer Struktur 20 mit zwei in eine Filterkeramik 1 eingebetteten Elektroden 3, die an eine Spannungsquelle 4 zur Erzeugung einer zeitveränderlichen Hochspannung angeschlossen sind. Bei der zeitveränderlichen Hochspannung kann es sich um eine Wechselspannung oder um eine zeitlich repetierende Impulsspannung handeln. Das rußhaltige Abgas E tritt durch die Filterkeramikwand 1. Dabei wird Ruß an der Filterkeramik 1 abgeschieden. Das rußgefilterte Abgas E' tritt auf der Gegenseite aus der Filterkeramik aus. Auf beiden Seiten der Filterkeramik bilden sich Oberflächengleitentladungen SD aus.

Figur 3 zeigt eine Struktur 30 mit einer in die Filterkeramik eingebetteten Elektrode 3 und einer aufliegenden Elektrode 5. Hier bildet sich nur auf der Seite der Filterkeramik eine Oberflächengleitentladung SD aus, die mit der Elektrode 5 belegt ist. Dadurch kann die Einkopplung elektrischer Energie auf Bereiche begrenzt werden, in denen Ruß abgeschieden wird.

Figur 4 zeigt eine Struktur 40 mit zwei auf gegenüberliegenden Seiten der Filterkeramik 1 aufliegenden Elektroden 5. Wie in der Anordnung nach Figur 2 kommt es hier zur Ausbildung von Oberflächengleitentladungen auf beiden Seiten der Filterkeramik.

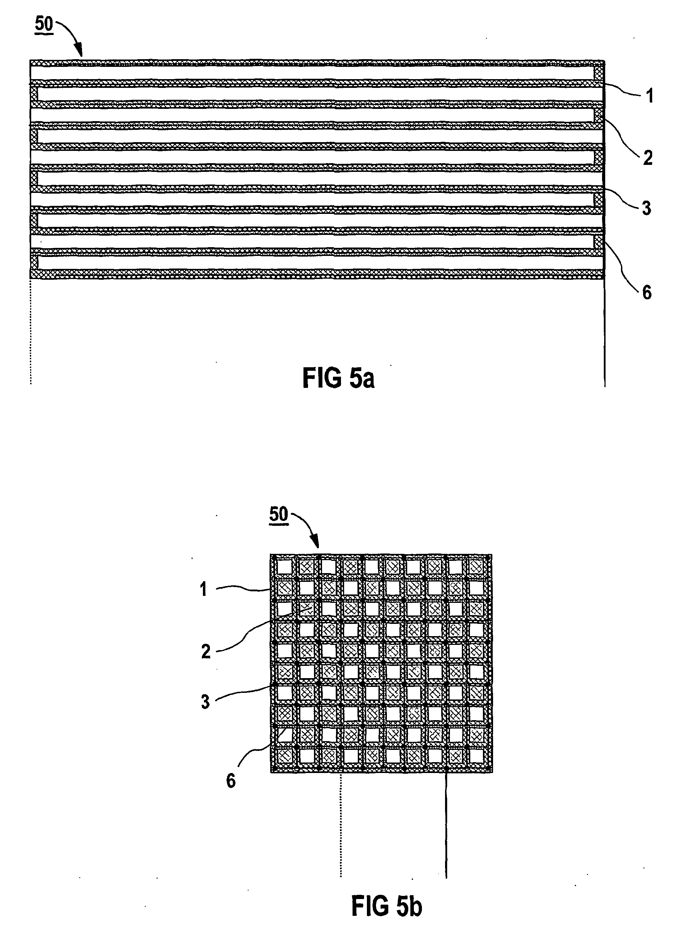

Figur 5a zeigt ein plasmaregeneriertes Filter 50 mit eingebetteten Elektroden 3 im Längsschnitt und in Figur 5b im Querschnitt. Die Elektroden 3 gleicher Polarität sind durch eine Verdrahtung 6 miteinander verbunden. Der Vergleich von Figur 1 und Figur 5 zeigt in beiden Fällen eine Wabenstruktur mit wechselseitig an den Enden verschlossenen Zellen.

Als Filtermaterial kommen in an sich bekannter Weise Cordierit, Siliziumcarbid (SiC), und das sog. NZP (NaZr₂P₃O₁₂) in Frage, wobei jeweils Zusätze zur Einstellung der elektrischen Leitfähigkeit vorhanden sind, um geeignete elektrische Eigenschaften zu erreichen.

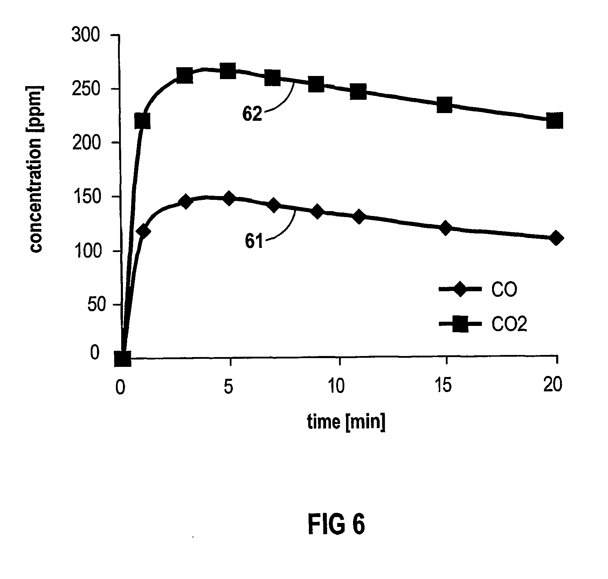

Abbildung 6 zeigt den experimentellen Nachweis der Oxidation von auf Oberflächen abgeschiedenem Ruß anhand der Bildung von CO und CO₂ durch Oberflächengleitentladungen in Luft bei Zimmertemperatur. Aufgetragen ist auf der Ordinate die Konzentration von Kohlenmonoxid (CO) und Kohlendioxid (CO₂) im Abgas der Oberflächengleitentladungen in ppm und auf der Abszisse die Zeit in Minuten. Dabei kennzeichnet die Kurve 61 den CO- und die Kurve 62 den CO₂-Gehalt als Funktion der Zeit. Man erkennt, dass beide Kurven nach dem schnellen Anstieg unmittelbar nach dem Einschalten der Oberflächengleitentladungen zum Zeitpunkt 0 weiter langsam ansteigen, ein Maximum durchlaufen und danach wieder abfallen. Der langsame Anstieg ist auf das Ansteigen der Konzentration des an der Rußoberfläche adsorbierten CO(s) bis zu einem Sättigungswert zurückzuführen, Maximum und Abfall auf die stetige Abnahme der adsorbierten Rußmasse durch Oxidation.

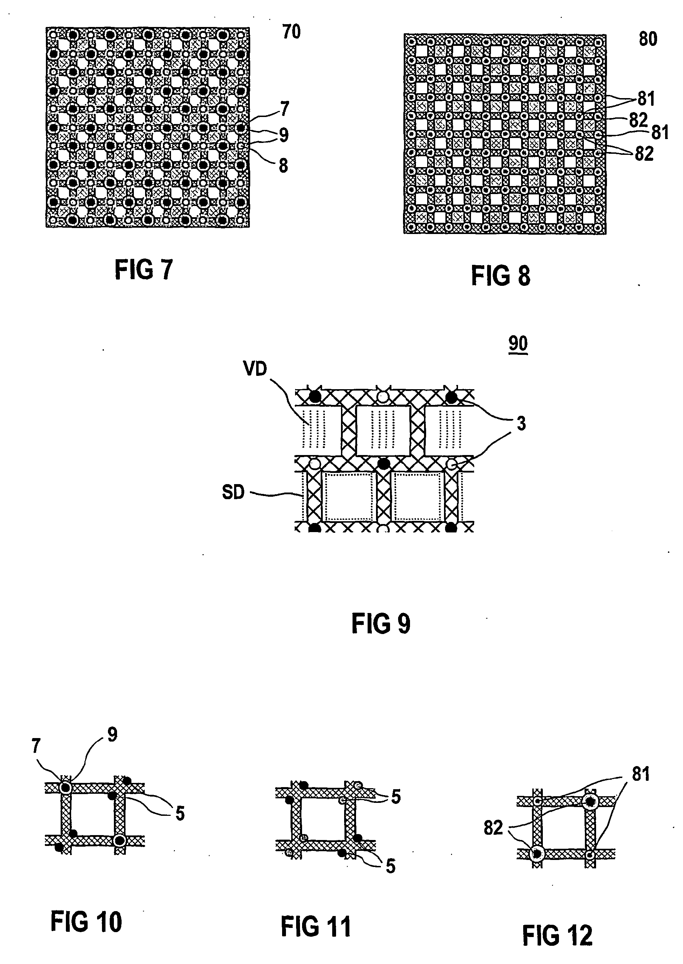

Figur 7 zeigt den Querschnitt eines plasmaregenerierten Filters 70 mit dielektrisch beschichteten, eingebetteten Elektroden 7 und Gegenelektroden 8. Die dielektrische Beschichtung 9 verhindert den direkten Stromfluss zwischen Elektroden 7 und Gegenelektroden 8. Wahlweise kann auf die dielektrische Beschichtung entweder der Elektroden 7 oder der Gegenelektroden 8 verzichtet werden.

Figur 8 zeigt den Querschnitt eines plasmaregenerierten Filters 80 mit Elektrodenstrukturen aus Keramik mit erhöhter Leitfähigkeit sowohl für die Elektroden 81 als auch für die Gegenelektroden 82, die in den Filter integriert sind.

Figur 9 zeigt einen Ausschnitt aus einem plasmaregenerierten Filter 90, der aus zu einer Wabenstruktur zusammengesetzten Zellen mit rechteckigem Querschnitt besteht, wobei die Zellen in Reihen angeordnet sind, und in dem durch seitlichen Versatz der Reihen gegeneinander in einem Teil der Zellen Oberflächenentladungen SD und in einem anderen Teil der Zellen Volumenentladungen VD brennen. Benachbarte Reihen sind um jeweils die halbe Zellbreite gegeneinander verschroben. Als Beispiel wurden hier nicht dielektrisch beschichtete Elektroden 3 verwendet. Diese Anordnung ist zur Oxidation von Ruß auf der einen Seite und Oxidation von NO zu NO₂ auf der anderen Seite der Filterkeramik geeignet.

Figur 10 stellt einen Ausschnitt aus einem plasmaregenerierten Filter mit eingebetteten, dielektrisch beschichteten Elektroden 7 und aufliegenden metallischen Elektroden 5 nach dem in Figur 3 gezeigten Prinzip dar. Figur 11 stellt einen Ausschnitt aus einem plasmaregenerierten Filter mit aufliegenden metallischen Elektroden 5 nach dem in Figur 4 gezeigten Prinzip dar. Aus beiden Darstellungen wird deutlich, dass Oberflächengleitentladungen in den Waben eines Wabenkörpers generierbar sind.

Figur 12 zeigt einen Ausschnitt aus einem plasmaregenerierten Filter mit eingebetteten Elektroden 81 und offenen Elektroden 82 im Wechsel, die durch Filterkeramik mit lokal erhöhter Leitfähigkeit gebildet werden. Dabei ist der elektrisch leitfähige Bereich der Keramik bei der eingebetteten Elektrode so klein gewählt, dass er vollständig von isolierender Keramik umgeben ist, während er für die Gegenelektrode so groß gewählt wurde, dass an der Oberfläche Bereiche hinreichend hoher elektrischer Leitfähigkeit vorhanden sind.

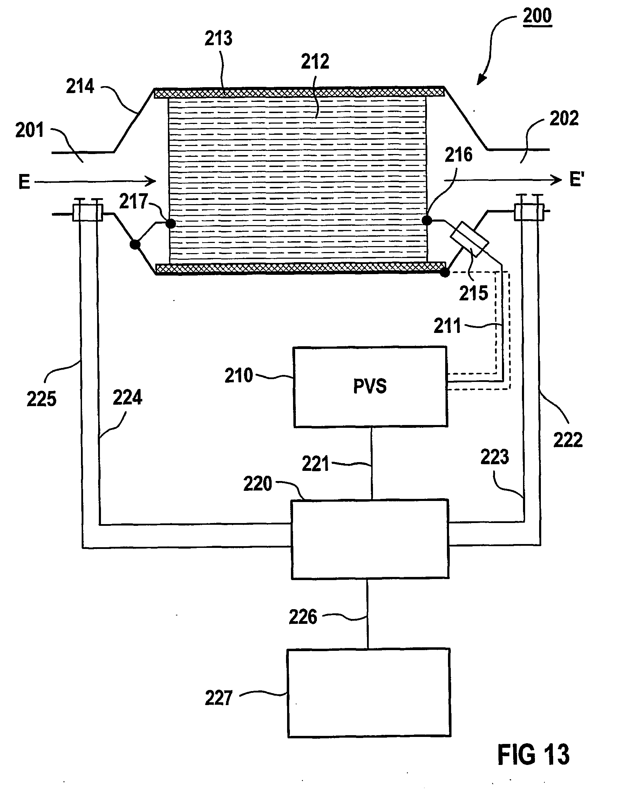

In Figur 13 ist eine Einrichtung zur Anwendung von nichtthermischen Gasentladungen auf Diesel-Abgase mit 200 bezeichnet. In der Einrichtung 200 mit einem Eingang 201 für nicht behandeltes Abgas E (Exhaust) und einem Ausgang 202 für behandeltes Abgas E' befindet sich eine der vorstehend im Einzelnen beschriebenen Filteranordnungen. Es ist eine Pulsspannungsquelle (PVS = Pulse Voltage Source) 210 vorhanden, mit der eine Hochspannung geeigneter Amplitude und Frequenz erzeugt wird. Die Hochspannungsquelle 210 ist über ein Koaxialkabel 211 mit der Plasmafiltereinheit 212 verbunden, die durch eine elektrisch und thermisch,isolierende, stoßdämpfende Matte 213 in die metallische Filterhülle 214 eingepasst ist. Als Matte 213 wird dicht gesinderte keramik auf der Basis Aluminiumoxid (Al₂O₃), Aluminiumnitrit (AℓN), Zirkonyoxid (ZrO₂), Bornitrit (BN), Cordierit etc. mit einer Wanddicke von 0,5 mm bis 10 mm eingesetzt, die innerhalb und außerhalb der Filterhülle 214 mm mindestens 5 mm und bis zu 50 mm über die metallische Wand der Filterhülle 214 hinausragt. Dabei ist der Hochspannung führende Innenleiter des Koaxialkabels 211 über eine Hochspannungsdurchführung 215 mit der Elektrodenseite 216 der Plasmafiltereinheit 212 verbunden, während die Gegenelektrodenseite 217 der Plasmafiltereinheit 212 und der Außenleiter mit der als gemeinsamem elektrischen Massepunkt dienenden Filterhülle 214 verbunden sind. Das Koaxialkabel ist temperaturbeständig bis 250°C durch Wahl der Matte 213.

Ein Steuergerät 220 dient zur Ansteuerung der PVS 210 über ein Steuerkabel 221. Als Eingangsgrößen für das Steuergerät 220 werden insbesondere Druck und Temperatur verwendet. Hierzu sind in der Anordnung vor dem Dieselpartikelfilter zwei Sensoren 222 und 223 für Pᵢₙ einerseits und Tᵢₙ andererseits sowie nach dem Dieselpartikelfilter 200 zwei Sensoren 224 und 225 für Pₒᵤₜ einerseits und Tₒᵤₜ andererseits vorhanden. Das Steuergerät 220 kann weiterhin Einrichtungen zum Speichern und Auswerten motorbedingter Kennlinienfelder aufweisen, die über eine Datenleitung 226 von der Motorsteuerung 227 übermittelt werden können.

Ergänzend werden Einzelheiten der elektrischen Betriebssicherheit und der elektromagnetischen Verträglichkeit und die zu ihrer Lösung vorgesehenen Einzelmaßnahmen beschrieben:
- Da die Eintrittsfläche des Filters sowie sonstige Oberflächen auf der Eintrittsseite des Filters sich im Betrieb mit Ruß belegen, der die dielektrische Festigkeit reduziert, erfolgen die Hochspannungsdurchführung 215 durch die metallische Reaktorhülle 214 und der Hochspannungsanschluss der Plasmafiltereinheit 216 bevorzugt an der Austrittsseite des Filters.
- Die Ausführung der Reaktorhülle 214, insbesondere hinsichtlich elektrischer Masseverbindungen und elektrischer Leitfähigkeit, erfolgt so, dass eine elektromagnetische Abschirmung der von Impulsströmen in der Plasmafiltereinheit ausgehenden Störungen gegeben ist: Dazu werden Materialien hoher elektrischer Leitfähigkeit gewählt und alle Masseverbindungen 217 niederinduktiv und mit großer Oberfläche zur Vermeidung des Skineffektes ausgeführt. Typische Werte für die elektrische Leitfähigkeit liegen zwischen 5 Sm/mm² und 65 Sm/mm². Um die elektromagnetische Verträglichkeit sicherzustellen, kann das metallische Gehäuse auch aus einer inneren, chemisch inerten Schicht niedriger Leitfähigkeit und einer äußeren Schicht hoher elektrischer Leitfähigkeit bestehen. Typische Werte für Anschlussinduktivitäten von Masseverbindung 217 und Hochspannungsverbindung liegen zwischen 10 nH und 10 µH.
- Schließlich werden zur Vermeidung zwangsläufig irreversibler Zerstörungen der Plasmafiltereinheit Elektroden mit einem geeigneten Durchgangswiderstand verwendet, die im Falle eines lokalen Durchbruchs von Gasentladungen durch das Filtermaterial über einen Anstieg des Spannungsabfalls entlang der Elektrode den Strom und damit die im Material umgesetzte Leistung auf einen vertretbaren Bruchteil des Gesamtstromes bzw. der Gesamtleistung begrenzen. Dieser Bruchteil wird sinnvoller Weise so niedrig gewählt, dass der Strom oder die Leistung pro Kanal im Fehlerfall das 10fache des normalen Stromes oder der normalen Leistung nicht übersteigt. In besonders vorteilhafter Weise werden sowohl die Hochspannungselektroden als auch die an Masse angeschlossenen Gegenelektroden diesen spezifischen Widerstand haben, um elektrische Durchschläge an den Enden auszuschließen.

Neben der reinen Schutzfunktion werden bei der in der Figur 13 beschriebenen Anordnung durch die Vermeidung von Stromspitzen also insbesondere unerwünschten EMV-Problemen vorgebeugt. Weiterhin sorgt die resistive Beschaltung der einzelnen Rußfilterkanäle für eine Vergleichmäßigung der Leistungseinkopplung über den Filterquerschnitt, da die leistungsbegrenzende Wirkung des Elektrodenwiderstandes nicht nur die lokale Leistungseinkopplung in einem Rußfilterkanal selbst, sondern auch die Leistungseinkopplung in den gesamten Kanal begrenzt.

Für den spezifischen Widerstand der elektrisch isolierenden Matte 213 kommen Werte zwischen 100 Ω/cm Elektrodenlänge und 100 kΩ/cm Elektrodenlänge in Frage, bevorzugt aber Werte zwischen 1 kΩ/cm und 10 kΩ/cm Elektrodenlänge.

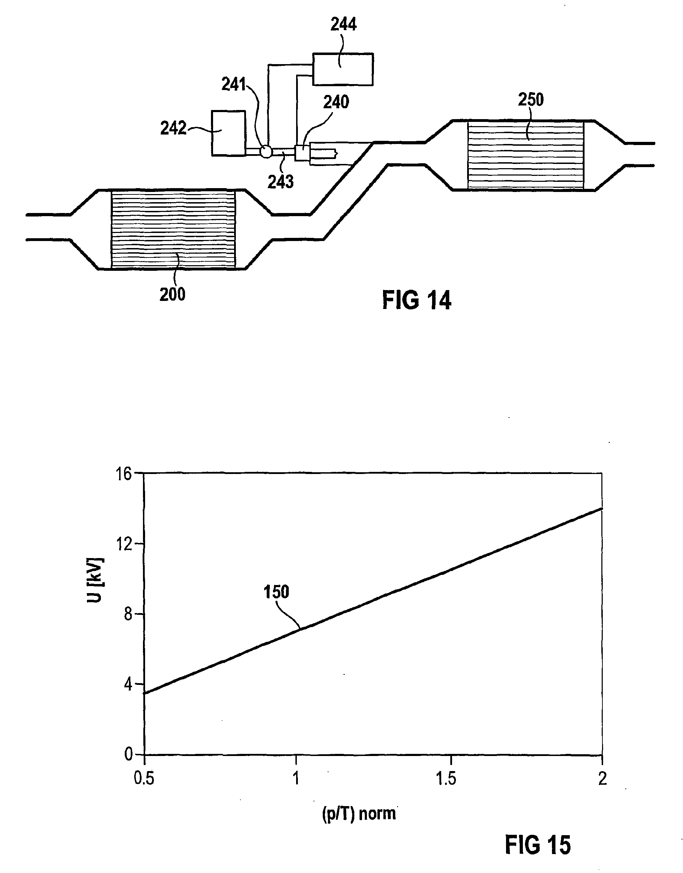

In Figur 14 ist die in Figur 13 dargestellte Plasmafilter-Einrichtung 200 mit einem Reaktor 250 für eine selektive katalytische Reduktion SCR (= Selective Catalytic Reduction) kombiniert. Zwischen dem Ausgang der Plasmafilter-Einrichtung 200 und dem Eingang des SCR-Reaktors 250 ist eine Einspritzdüse 240 zum Einspritzen eines Reduktionsmittels RA (= Reducing Agent) vorhanden, das mittels einer Pumpe 241 aus einem Vorratstank 242 über eine Druckleitung 243 zugeführt wird. Die Ansteuerung von Pumpe und Ventil erfolgt über eine Regeleinheit 244 auf der Grundlage von Sensor- und Kennliniendaten.

Zur Regelung der in den Oberflächengleitentladungen umgesetzten mittleren elektrische Leistung wird nach folgender Strategie vorgegangen: Es wird von einer Mindestleistung Pₘᵢₙ für einen Druckabfall am Filter unterhalb eines Schwellwertes Δp₁ ausgegangen. Bei Überschreiten von Δp₁ wird die Leistung proportional zur zeitlichen Druckzunahme dp/dt erhöht bis auf einen druck- und temperaturabhängigen Maximalwert Pₘₐₓ(pᵢₙ/ T_{gas}). Dort wird die Leistung gehalten bis eine Druckabnahme zurück auf den Schwellwert Δp₁ erfolgt ist. Zur zyklischen Regeneration wird die in den Oberflächengleitentladungen umgesetzte mittlere elektrische Leistung nach folgender Strategie geregelt: Solange der Druckabfall am Filter unterhalb eines Schwellwertes Δp₁ liegt, erfolgt keine Leistungseinkopplung. Bei Überschreiten von Δp₁ wird die Leistung proportional zur zeitlichen Druckzunahme dp/dt erhöht bis auf einen Druck- und Temperaturabhängigem Maximalwert Pₘₐₓ (pᵢₙ/T_{gas}).
Dort wir die Leistung gehalten bis die Druckabnahme auf den Schwellwert Δp₁ erfolgt ist.

In Kombination mit Maßnahmen zur Stickoxidreduktion ist diese Regelstrategie kombinierbar mit einer Strategie zur plasmainduzierten Oxidation von NO zu NO₂. Verfahren zur plasmagestützten selektiven katalytischen Reduktion sind dadurch gekennzeichnet, dass bei niedrigen Temperaturen die Reduktion von NO₂ bevorzugt abläuft mit Kohlenwasserstoff als Reduktionsmittel oder im Falle von Ammoniak oder ammoniakhaltigen Reduktionsmitteln NO₂ die Reduktion von NO bei niedrigen Temperaturen ermöglicht. Die Rate Rₒₓ der plasmainduzierten Konversion von NO zu NO₂ ist proportional zur mittleren Plasmaleistung. Damit erfolgt die Regelung so, dass die minimale Plasmaleistung Pₘᵢₙ proportional zur erforderlichen Rate Rₒₓ des NO-Umsatzes eingestellt wird, solange keine Regeneration des Rußfilters erforderlich ist. Für den Fall der Regeneration wird das Maximum der für Regeneration und NO-Konversion erforderlichen Leistungen eingestellt.

Die Leistung wird eingestellt über die Wahl einer geeigneten Spannungsamplitude U₀ und einer geeigneten Frequenz oder Pulswiederholrate f: Es ist bekannt, dass für das Zünden einer Gasentladung eine minimale Spannung, die Zündspannung, erforderlich ist. Oberhalb dieser Zündspannung steigt bei nichtthermischen Gasentladungen des hier eingesetzten Typs die Stromamplitude und damit die pro Puls- oder die pro Periode dissipierte Energie stark an. Um thermische Effekte als Folge hoher elektrischer Leistungsdichten in der Gasentladung zu vermeiden, ist es vorteilhaft, den Strom durch Einstellung einer geeigneten Spannungsamplitude zu begrenzen. Nun variiert die Zündspannung einer Gasentladung stark mit Druck und Temperatur, während die als Quotient aus elektrischer Feldstärke E und Teilchenzahldichte N gebildete reduzierte Zündfeldstärke E/N nur schwach davon abhängt. Eine Regelung der Spannungsamplitude U₀ als Funktion von Druck und Temperatur ist deshalb vorteilhaft. Weiterhin ergibt sich, dass die Spannungsamplitude grob linear mit dem Elektrodenabstand ansteigt. Für praktisch einsetzbare Filter ergeben sich daher minimale Zündspannungen von ca. 3 kV. Spannungen von 20 kV sollten hingegen aus Sicherheitsgründen nicht überschritten werden. Pulswiederholraten oder Frequenzen von mindestens 100 Hz und höchstens 200 kHz sind für diese Anwendung geeignet.

In Figur 15 ist eine Kennlinie für das Einstellen einer geeigneten Amplitude für eine Pulsspannung U₀ in kV in Abhängigkeit vom Quotienten pᵢₙ/Tᵢₙ normiert auf Normaldruck p₀ (1013 hPa) und Normaltemperatur T₀ (273,15 K) dargestellt. Vorteilhafterweise ergibt sich in dieser Darstellung eine in etwa linear verlaufende Kennlinie 150, so dass die Steuerung vereinfacht wird. Die Kennlinie 150 ist unmittelbar im Speicher der Kontrolleinrichtung 220 abgespeichert.

Für elektrische Anregung mit Wechselspannungen gilt sinngemäß das gleiche wie für Anregung mit Pulsspannungen, wobei die Amplituden der Spannungen als Differenz zwischen maximaler und minimaler Spannung (Spitze-Spitze oder pk-to-pk) zu nehmen sind.

Für den Fachmann ist offensichtlich, dass weitere Kombinationen von Geometrien mit unterschiedlichen Elektrodentypen möglich sind. Ebenso ist offensichtlich, dass diese Geometrien auch mit katalytischen Materialien zur Förderung der Oxidation kombiniert werden können.

## Patentansprüche

1. Verfahren zur Verminderung kohlenstoffhaltiger Partikelemissionen von Dieselmotoren, wobei das vom Motor emittierte Abgas durch einen Wandflussfilter strömt, die im Abgas enthaltenen Partikel an Filteroberflächen abgeschieden werden und zwecks Regeneration des Filters die abgeschiedenen Partikel oxidiert werden, **dadurch gekennzeichnet, dass** die Regeneration durch an den mit den Partikeln belegten Filteroberflächen erzeugte nichtthermische, elektrische Oberflächengleitentladungen ausgelöst wird.

2. Verfahren nach Anspruch 1, **dadurch gekennzeichnet, dass** die Oberflächengleitentladungen zwischen je zwei Elektroden erzeugt werden, die in ein dielektrisches Filtermaterial niedriger elektrischer Leitfähigkeit eingebettet sind.

3. Verfahren nach Anspruch 1 oder Anspruch 2, **dadurch gekennzeichnet, dass** die Oberflächengleitentladungen erzeugt werden zwischen je einer Elektrode, die in ein dielektrisches Filtermaterial niedriger elektrischer Leitfähigkeit eingebettet ist, und einer Gegenelektrode die auf der dem einströmenden Abgas zugewandten Filteroberfläche angebracht ist.

4. Verfahren nach Anspruch 2 oder Anspruch 3, **dadurch gekennzeichnet, dass** das Filtermaterial als dielektrische Barriere ausgelegt ist und dass die Oberflächengleitentladungen erzeugt werden zwischen je einer Elektrode, die auf der dem einströmenden Abgas zugewandten Filteroberfläche angebracht ist, und einer Gegenelektrode, die auf der austrittsseitigen Filteroberfläche angebracht ist.

5. Verfahren nach Anspruch 4, **dadurch gekennzeichnet, dass** die elektrische Anregung für die Oberflächengleitentladung durch eine Wechselspannung oder eine periodische Pulsspannung, vorzugsweise mit einer Amplitude zwischen 3 kV und 20 kV (pk-to-pk), und einer Frequenz/Pulswiederholrate zwischen 100 Hz und 200 kHz erfolgt, wobei die elektrische Leistungsregelung durch Anpassung von Amplitude und Frequenz erfolgt.

6. Verfahren nach Anspruch 5, **dadurch gekennzeichnet, dass** die Amplitude als Funktion des Quotienten pᵢₙ/T_{gas} vom Druck am Filtereintritt pᵢₙ und Gastemperatur T_{gas} geregelt wird.

7. Verfahren nach Anspruch 5, **dadurch gekennzeichnet, dass** die Frequenz als Funktion von Filterbelegung m_{particle} und Filtertemperatur T_{filter} gewählt wird.

8. Verfahren nach Anspruch 7, **dadurch gekennzeichnet, dass** die Filterbelegung m_{particle} aus Druckabfall am Filter Δp bestimmt wird.

9. Verfahren nach Anspruch 1, **dadurch gekennzeichnet, dass** die Regeneration kontinuierlich erfolgt.

10. Verfahren nach Anspruch 9, **dadurch gekennzeichnet, dass** die in den Oberflächengleitentladungen umgesetzte mittlere elektrische Leistung geregelt wird nach folgender Strategie:
- es wird von einer Mindestleistung Pₘᵢₙ für Druckabfall am Filter kleiner als ein Schwellwert Δp₁ ausgegangen,
- bei Überschreiten vom Schwellwert Δp₁ wird die Leistung proportional zur zeitlichen Druckzunahme dp/dt erhöht bis auf einen druck- und temperaturabhängigem Maximalwert Pₘₐₓ(pᵢₙ/T_{gas}), wobei Pᵢₙ der Druck aus Filtereintritt und T_{gas} die Gastemperatur ist,
- die Leistung wird dort gehalten, bis Druckabnahme auf Schwellwert Δp1 erfolgt ist.

11. Verfahren nach Anspruch 1 und 8, **dadurch gekennzeichnet, dass** die Regeneration zyklisch erfolgt.

12. Verfahren nach Anspruch 11, **dadurch gekennzeichnet, dass** die in den Oberflächengleitentladungen umgesetzte mittlere elektrische Leistung geregelt wird nach folgender Strategie:
- es wird von einem Leistungswert 0 für einen Druckabfall am Filter kleiner als ein Schwellwert Δp₁ ausgegangen,
- bei Überschreiten vom Schwellwert Δp₁ wird die Leistung proportional zur zeitlichen Druckzunahme dp/dt erhöht und zwar bis zum druck- und temperaturabhängigen Maximalwert Pₘₐₓ (Pᵢₙ /T_{gas}), wobei Pᵢₙ der Druck am Filtereintritt und T_{gas} die Gastemperatur ist,
- die Leistung wird dort gehalten, bis die Druckabnahme auf den Schwellwert Δp₁ erfolgt ist.

13. Verfahren nach Anspruch 1, **dadurch gekennzeichnet, dass** nach Minderung der Partikelemission durch nichtthermische Gasentladungen auf der Ausgangsseite des Partikelfilters Stickstoffmonoxid (NO) zu Stickstoffdioxid (NO₂) konvertiert wird und danach eine katalytische Reduktion der Stickoxide erfolgt.

14. Verfahren nach Anspruch 13, **dadurch gekennzeichnet, dass** das für die katalytische Reduktion erforderliche Reduktionsmittel nach dem Partikelfilter und vor dem Reduktionskatalysator zudosiert wird.

15. Anordnung zur Durchführung des Verfahrens nach Anspruch 1 oder einem der Ansprüche 2 bis 12, mit einem keramischen Wandflussfilter (50, 70, 80, 90, 200) und Mitteln (3, 5, 7, 8, 9, 81, 82, 216, 217) zum Oxidieren der am keramischen Filter abgeschiedenen Partikel, **dadurch gekennzeichnet, dass** die Mittel (3, 5, 7, 8, 9, 81, 82, 216, 217) zur Oxidation der Partikel elektrische Oberflächengleitentladungen an der mit Partikeln belegten Keramik (6) des Filters (50, 70, 80, 90, 200) bereitstellen.

16. Anordnung nach Anspruch 15, **dadurch gekennzeichnet, dass** zur Bereitstellung der elektrischen Oberflächengleitentladungen Elektrodenstrukturen bestehend aus Elektroden (3, 7, 81, 216) und Gegenelektroden (5, 8, 82, 217) vorhanden sind, die zumindest teilweise in den Filter (50, 70, 80, 90, 200) integriert sind.

17. Anordnung zur Durchführung des Verfahrens nach Anspruch 13 oder Anspruch 14, mit einem keramischen Rußfilter (50, 70, 80, 90, 200) und Mitteln (3, 5, 7, 8, 9, 81, 82, 216, 217) zum Oxidieren der am keramischen Filter (50, 70, 80, 90, 200) abgeschiedenen Partikel, Mitteln (3, 5, 7, 8, 9, 81, 82, 216, 217) zum Oxidieren gasförmiger Schadstoffe, Mitteln (241) zur Zudosierung eines Reduktionsmittels (242) in den Abgasstrom und Mitteln (250) zur katalytischen Reduktion von Stickoxiden **dadurch gekennzeichnet, dass** die Mittel (3, 5, 7, 8, 9, 81, 82, 216, 217) zur Oxidation der Partikel elektrische Oberflächengleitentladungen an der Keramik (6) des Filters (50, 70, 80, 90, 200) und die Mittel (3, 5, 7, 8, 9, 81, 82, 216, 217) zur Oxidation der gasförmigen Schadstoffe dielektrisch behinderte Entladungen im auslassseitigen Volumen des Filters (50, 70, 80, 90, 200) bereitstellen.

18. Anordnung nach Anspruch 17, **dadurch gekennzeichnet, dass** zur Bereitstellung der Oberflächengleitentladungen und der dielektrisch behinderten Entladungen Elektrodenstrukturen bestehend aus Elektroden (3, 7, 81, 216) und Gegenelektroden (5, 8, 82, 217) vorhanden sind, die zumindest teilweise in den Filter (50, 70, 80, 90, 200) integriert sind.

19. Anordnung nach Anspruch 16 oder Anspruch 18, **dadurch gekennzeichnet, dass** von den Elektrodenstrukturen (3, 7, 81, 216) zumindest jeweils eine der Elektroden in die Keramik (6) des Filters (50, 70, 80, 90, 200) eingebettet ist.

20. Anordnung nach Anspruch 16 oder Anspruch 18, **dadurch gekennzeichnet, dass** die Elektroden (3, 7, 81, 216) in die Keramik (6) eingebettet sind und die Gegenelektroden (5, 8, 82, 217) auf der Keramik (6) aufliegen.

21. Anordnung nach Anspruch 15 oder Anspruch 17, **dadurch gekennzeichnet, dass** der Filter (50, 70, 80, 90, 200) aus zu einer Wabenstruktur zusammengesetzten Zellen mit rechteckigem Querschnitt besteht, die je wechselseitig an den Enden verschlossen sind, wodurch die Zellen entweder zum Abgaseinlass oder zum Auslass des Filters hin offen sind.

22. Anordnung nach Anspruch 21, **dadurch gekennzeichnet, dass** die Zellen innerhalb der Wabenstruktur in Reihen angeordnet sind, wobei benachbarte Reihen um jeweils die halbe Zellbreite gegeneinander verschoben sind

23. Anordnung nach Anspruch 15 oder Anspruch 17, **dadurch gekennzeichnet, dass** der Filter (50, 70, 80, 90, 200) aus poröser Keramik aus Cordierit, Siliziumcarbid (SiC) oder NZP (NaZr₂P₃O₁₂) mit Zusätzen zur Einstellung der elektrischen Eigenschaften, insbesondere der Leitfähigkeit, und zur katalytischen Rußoxidation besteht.

24. Anordnung nach Anspruch 16 oder Anspruch 18, **dadurch gekennzeichnet, dass** die Elektrodenstrukturen metallische Elektroden (3, 5, 7, 8, 81, 82, 216, 217) mit dielektrischem Überzug aufweisen.

25. Anordnung nach Anspruch 16 oder Anspruch 18, **dadurch gekennzeichnet, dass** die Elektrodenstrukturen (3, 5, 7, 8, 81, 82, 216, 217) durch Filtermaterial erhöhter Leitfähigkeit gebildet werden.

26. Anordnung nach Anspruch 15, **dadurch gekennzeichnet, dass** eine Pulsspannungsquelle (210) mit regelbarer Spannungsamplitude und Pulswiederholrate zur Versorgung der Oberflächengleitentladungen, Sensoren (222, 223, 224, 225) zur Messung der Temperaturen und Drücke vor und nach dem Filter (50, 70, 80, 90, 200), und eine Steuerung (220) mit Eingängen für die Messsignale der Temperatur- und Druckmessungen und in nichtflüchtigen Speichern abgelegten Regelkennlinien zur Regelung von Spannungsamplitude und Pulswiederholrate als Funktionen der Temperaturen und Drücke vorhanden sind.

27. Anordnung nach Anspruch 17, **dadurch gekennzeichnet, dass** eine Pulsspannungsquelle (210) mit regelbarer Spannungsamplitude und Pulswiederholrate zur Versorgung der Oberflächengleitentladungen und der dielektrisch behinderten Entladungen, Sensoren (222, 223, 224, 225) zur Messung der Temperaturen und Drücke vor und nach dem Filter 50, 70, 80, 90, 200, Mittel zur Bestimmung der NO-Konzentration im Abgas, und eine Steuerung (220) mit Eingängen für die Messsignale der Temperatur- und Druckmessungen sowie der Informationen zur NO-Konzentration und in nichtflüchtigen Speichern abgelegten Regelkennlinien zur Regelung von Spannungsamplitude und Pulswiederholrate als Funktionen der Temperaturen, der Drücke und der NO-Konzentration vorhanden sind.

28. Anordnung nach Anspruch 15 oder Anspruch 17, **gekennzeichnet durch** Mittel (213) zur Gewährleistung der Betriebssicherheit und der elektromagnetischen Verträglichkeit der mit Hochspannung (211) arbeitenden Mittel (212) zur Bereitstellung der Oberflächengleitentladungen.

29. Anordnung nach Anspruch 28, **dadurch gekennzeichnet, dass** ein Gehäuse (200, 214) aus einem Material hoher elektrischer Leitfähigkeit zwischen 5 Sm/mm² und 65 Sm/mm² als Filterhülle (214) für das Plasmafilterelement vorhanden ist.

30. Anordnung nach Anspruch 29, **dadurch gekennzeichnet, dass** das Plasmafilterelement (212) durch ein thermisch und elektrisch isolierendes Material (213) mit einer Dicke zwischen 1 mm und 1 cm gegen die Filterhülle (214) isoliert ist.

31. Anordnung nach Anspruch 30, **dadurch gekennzeichnet, dass** die Hochspannung über eine Durchführung (215) hoher dielektrischer Festigkeit auf der Austrittseite des Plasmafilterelementes (212) durch die Filterhülle (214) geführt ist und über eine Kontaktfläche an der Austrittsseite des Plasmafilterelementes (212) den Hochspannungselektroden zugeführt wird.

32. Anordnung nach Anspruch 31, **dadurch gekennzeichnet, dass** die als Masse dienenden Gegenelektroden (217) des Plasmafilterelementes (212) über dessen eintrittseitige Stirnfläche kontaktiert und mit der Filterhülle (214) als äußerer Masse verbunden sind.

33. Anordnung nach Anspruch 30, **dadurch gekennzeichnet, dass** die dem Filter (200) von außen über ein durch Wahl des thermisch und elektrisch isolierenden Materials (213) bis 250 °C temperaturbeständiges Koaxialkabel (211) als Hochspannung zugeführt wird, dessen Innenleiter an die Hochspannungsdurchführung (215) angeschlossen und dessen Außenleiter mit der Filterhülle (214) verbunden ist.

34. Anordnung nach Anspruch 30, **dadurch gekennzeichnet, dass** als thermisch und isolierendes Material (213) dicht gesinterte Keramik auf der Basis Aluminiumoxid (Al₂O₃), Aluminiumnitrit (AlN), Zirkondioxid (ZrO₂), Bornitrit (BN), Cordierit etc. mit einer Wanddicke von 0,5 mm bis 10 mm eingesetzt wird, das innerhalb und außerhalb der Filterhülle (214) um mindestens 5 mm und bis zu 50 mm über die metallische Wand der Filterhülle (214) hinausragt.

35. Anordnung nach Anspruch 33 oder Anspruch 34, **dadurch gekennzeichnet, dass** die Elektroden (216) oder die Gegenelektroden (217) einen spezifischen elektrischen Widerstand haben, der den Strom pro Kanal im Falle eines elektrischen Durchbruches durch das Filtermaterial (212) begrenzt.

36. Anordnung nach Anspruch 35, **dadurch gekennzeichnet, dass** der Strom auf das 10fache des normalen Stromes begrenzt wird.

37. Anordnung nach Anspruch 35, **dadurch gekennzeichnet, dass** sowohl die Elektroden (216) als auch die Gegenelektroden (217) den gleichen, spezifischen elektrischen Widerstand haben.

38. Anordnung nach Anspruch 35, **dadurch gekennzeichnet, dass** der Spezifische elektrische Widerstand im Bereich zwischen 100 Ω/cm Elektrodenlänge und 100 kΩ/cm Elektrodenlänge liegt.

39. Anordnung nach Anspruch 38, **dadurch gekennzeichnet, dass** der Spezifische elektrische Widerstand im Bereich zwischen 1 kΩ/cm Elektrodenlänge und 10 kΩ/cm Elektrodenlänge liegt.

## Claims

1. Method for reducing the level of carbon-containing particle emissions from diesel engines, in which the exhaust gas emitted by the engine flows through a wall flow filter, the particles contained in the exhaust gas are separated out at filter surfaces, and the particles which have been separated out are oxidized in order for the filter to be regenerated, **characterized in that** the regeneration is initiated by non-thermal, electric surface creeping discharges generated at the filter surfaces which are occupied by the particles.

2. Method according to Claim 1, **characterized in that** the surface creeping discharges are generated between in each case two electrodes which are embedded in a dielectric filter material of low electrical conductivity.

3. Method according to Claim 1 or Claim 2, **characterized in that** the surface creeping discharges are generated between in each case one electrode, which is embedded in a dielectric filter material of low electrical conductivity, and a counterelectrode, which is arranged on the filter surface which faces the exhaust gas flowing in.

4. Method according to Claim 2 or in Claim 3, **characterized in that** the filter material is designed as a dielectric barrier, and **in that** the surface creeping discharges are generated between in each case one electrode, which is arranged on the filter surface which faces the exhaust gas flowing in, and a counter-electrode, which is arranged on the outlet-side filter surface.

5. Method according to Claim 4, **characterized in that** the electrical excitation for the surface creeping discharge is effected by an alternating voltage or a periodic pulse voltage, preferably with an amplitude of between 3 kV and 20 kV (peak-to-peak) and a frequency/pulse repetition rate of between 100 Hz and 200 kHz, the electric power control being effected by adjusting amplitude and frequency.

6. Method according to Claim 5, **characterized in that** the amplitude is controlled as a function of the quotient pᵢₙ/T_{gas} of the pressure at the filter inlet pᵢₙ and the gas temperature T_{gas}.

7. Method according to Claim 5, **characterized in that** the frequency is selected as a function of the filter occupancy m_{particle} and the filter temperature T_{filter}.

8. Method according to Claim 7, **characterized in that** the filter occupancy m_{particle} is determined from the pressure drop at the filter Δp.

9. Method according to Claim 1, **characterized in that** the regeneration takes place continuously.

10. Method according to Claim 9, **characterized in that** the mean electric power converted in the surface creeping discharges is controlled according to the following strategy:
- the starting point is a minimum power Pₘᵢₙ for the pressure drop at the filter of less than a threshold value Δp₁,
- when the threshold value Δp₁ is exceeded, the power is increased proportionally to the temporal pressure increase dp/dt up to a pressure-dependent and temperature-dependent maximum value Pₘₐₓ(pᵢₙ/T_{gas}), pᵢₙ being the pressure at the filter inlet and T_{gas} being the gas temperature,
- the power is held at that level until the pressure has dropped to threshold value Δp₁.

11. Method according to Claims 1 and 8, **characterized in that** the regeneration takes place cyclically.

12. Method according to Claim 11, **characterized in that** the mean electric power converted in the surface creeping discharges is controlled according to the following strategy:
- the starting point is a power value 0 for a pressure drop at the filter of less than a threshold value Δp₁,
- when the threshold value Δp₁ is exceeded, the power is increased proportionally to the temporal pressure increase dp/dt, specifically up to the pressure-dependent and temperature-dependent maximum value Pₘₐₓ(pᵢₙ/T_{gas}), pᵢₙ being the pressure at the filter inlet and T_{gas} being the gas temperature,
- the power is held at that level until the pressure has dropped to the threshold value Δp₁.

13. Method according to Claim 1, **characterized in that** nitrogen monoxide (NO) is converted into nitrogen dioxide (NO₂) after a reduction in the levels of particle emissions by non-thermal gas discharges on the outlet side of the particle filter, and catalytic reduction of the nitrogen oxides then takes place.

14. Method according to Claim 13, **characterized in that** the reducing agent required for the catalytic reduction is metered in downstream of the particle filter and upstream of the reduction catalytic converter.

15. Arrangement for carrying out the method according to Claim 1 or one of Claims 2 to 12, having a ceramic wall flow filter (50, 70, 80, 90, 200) and means (3, 5, 7, 8, 9, 81, 82, 216, 217) for oxidizing the particles separated out at the ceramic filter, **characterized in that** the means (3, 5, 7, 8, 9, 81, 82, 216, 217) for oxidizing the particles create electric surface creeping discharges at the ceramic (6), covered with particles, of the filter (50, 70, 80, 90, 200).

16. Arrangement according to Claim 15, **characterized in that** to provide the electric surface creeping discharges there are electrode structures comprising electrodes (3, 7, 81, 216) and counterelectrodes (5, 8, 82, 217) which are at least partially integrated in the filter (50, 70, 80, 90, 200).

17. Arrangement for carrying out the method according to Claim 13 or Claim 14, having a ceramic particulate filter (50, 70, 80, 90, 200) and means (3, 5, 7, 8, 9, 81, 82, 216, 217) for oxidizing the particles separated out at the ceramic filter (50, 70, 80, 90, 200), means (3, 5, 7, 8, 9, 81, 82, 216, 217) for oxidizing gaseous pollutants, means (241) for metering a reducing agent (242) into the exhaust-gas stream and means (250) for the catalytic reduction of nitrogen oxides, **characterized in that** the means (3, 5, 7, 8, 9, 81, 82, 216, 217) for oxidizing the particles create electric surface creeping discharges at the ceramic (6) of the filter (50, 70, 80, 90, 200), and the means (3, 5, 7, 8, 9, 81, 82, 216, 217) for oxidizing the gaseous pollutants create dielectric barrier discharges in the outlet-side volume of the filter (50, 70, 80, 90, 200).

18. Arrangement according to Claim 17, **characterized in that** to create the surface creeping discharges and the dielectric barrier discharges there are electrode structures comprising electrodes (3, 7, 81, 216) and counterelectrodes (5, 8, 82, 217) which are at least partially integrated in the filter (50, 70, 80, 90, 200).

19. Arrangement according to Claim 16 or Claim 18, **characterized in that** at least in each case one of the electrodes of the electrode structures (3, 7, 81, 216) is embedded in the ceramic (6) of the filter (50, 70, 80, 90, 200).

20. Arrangement according to Claim 16 or Claim 18, **characterized in that** the electrodes (3, 7, 81, 216) are embedded in the ceramic (6) and the counterelectrodes (5, 8, 82, 217) rest on the ceramic (6).

21. Arrangement according to Claim 15 or Claim 17, **characterized in that** the filter (50, 70, 80, 90, 200) comprises cells which are rectangular in cross section, are assembled to form a honeycomb structure and are each closed off at alternate ends, with the result that the cells are open either toward the exhaust-gas inlet or toward the outlet of the filter.

22. Arrangement according to Claim 21, **characterized in that** the cells within the honeycomb structure are arranged in rows, adjacent rows being offset with respect to one another by in each case the width of half a cell.

23. Arrangement according to Claim 15 or Claim 17, **characterized in that** the filter (50, 70, 80, 90, 200) consists of porous ceramic comprising cordierite, silicon carbide (SiC) or NZP (NaZr₂P₃O₁₂) with additives for adjusting the electrical properties, in particular the conductivity, and for catalytic oxidation of particulates.

24. Arrangement according to Claim 16 or Claim 18, **characterized in that** the electrode structures have metallic electrodes (3, 5, 7, 8, 81, 82, 216, 217) with a dielectric coating.

25. Arrangement according to Claim 16 or Claim 18, **characterized in that** the electrode structures (3, 5, 7, 8, 81, 82, 216, 217) are formed by filter material of high conductivity.

26. Arrangement according to Claim 15, **characterized in that** it includes a pulsed voltage source (210) with controllable voltage amplitude and pulse repetition rate for supplying the surface creeping discharges, sensors (222, 223, 224, 225) for measuring the temperatures and pressures upstream and downstream of the filter (50, 70, 80, 90, 200), and a control unit (220) with inputs for the measurement signals from the temperature and pressure measurements and control characteristic curves stored in nonvolatile memories for controlling voltage amplitude and pulse repetition rate as functions of the temperatures and pressures.

27. Arrangement according to Claim 17, **characterized in that** it includes a pulsed voltage source (210) with controllable voltage amplitude and pulse repetition rate for supplying the surface creeping discharges and the dielectric barrier discharges, sensors (222, 223, 224, 225) for measuring the temperatures and pressures upstream and downstream of the filter (50, 70, 80, 90, 200), means for determining the NO concentration in the exhaust gas, and a control unit (220) with inputs for the measurement signals from the temperature and pressure measurements and the information relating to the NO concentration, and control characteristic curves stored in nonvolatile memories for controlling voltage amplitude and pulse repetition rate as functions of the temperatures, the pressures and the NO concentration.

28. Arrangement according to Claim 15 or Claim 17, **characterized by** means (213) for ensuring the operational reliability and the electromagnetic compatibility of the means (212) for providing the surface creeping discharges, which operate at high voltage (211).

29. Arrangement according to Claim 28, **characterized in that** it includes a housing (200, 214) made from a material of high electrical conductivity of between 5 Sm/mm² and 65 Sm/mm² as a filter casing (214) for the plasma filter element.

30. Arrangement according to Claim 29, **characterized in that** the plasma filter element (212) is insulated from the filter casing (214) by a thermally and electrically insulating material (213) with a thickness of between 1 mm and 1 cm.

31. Arrangement according to Claim 30, **characterized in that** the high voltage is passed through the filter casing (214) via a leadthrough (215) of high dielectric strength on the outlet side of the plasma filter element (212) and is fed to the high-voltage electrodes via a contact surface on the outlet side of the plasma filter element (212).

32. Arrangement according to Claim 31, **characterized in that** contact is made with the counterelectrodes (217), which are used as earth, of the plasma filter element (212) via the inlet-side end face of the latter, and said counterelectrodes (217) are connected to the filter casing (214) as outer earth.

33. Arrangement according to Claim 30, **characterized in that** the is fed to the filter (200) as high voltage from outside via a coaxial cable (211) which, by suitable selection of the thermally and electrically insulating material (213), is made able to withstand temperatures of up to 250°C, the inner conductor of which is connected to the high-voltage leadthrough (215) and the outer conductor of which is connected to the filter casing (214).

34. Arrangement according to Claim 30, **characterized in that** the thermally and insulating material (213) used is densely sintered ceramic based on aluminium oxide (Al₂O₃), aluminium nitrite (AlN), zirconium dioxide (ZrO₂), boron nitride (BN), cordierite, etc. with a wall thickness of from 0.5 mm to 10 mm which projects at least 5 mm and up to 50 mm beyond the metallic wall of the filter casing (214) inside and outside the filter casing (214).

35. Arrangement according to Claim 33 or Claim 34, **characterized in that** the electrodes (216) or the counterelectrodes (217) have a resistivity which limits the current per channel in the event of an electrical breakdown through the filter material (212).

36. Arrangement according to Claim 35, **characterized in that** the current is limited to ten times the normal current.

37. Arrangement according to Claim 35, **characterized in that** both the electrodes (216) and the counterelectrodes (217) have the same resistivity.

38. Arrangement according to Claim 35, **characterized in that** the resistivity is in the range between 100 Ω/cm electrode length and 100 kΩ/cm electrode length.

39. Arrangement according to Claim 38, **characterized in that** the resistivity is in the range between 1 kΩ/cm electrode length and 10 kΩ/cm electrode length.

## Revendications

1. Procédé de diminution d'émissions de particules carbonacées par des moteurs Diesel, les gaz d'échappement émis par le moteur passant dans un filtre à flux traversant une paroi, les particules contenues dans les gaz d'échappement étant déposées sur des surfaces du filtre et les particules déposées étant oxydées en vue de régénérer le filtre, **caractérisé en ce que** l'on déclenche la régénération par des décharges électriques glissantes de surface non thermiques produites sur les surfaces du filtre occupées par les particules.

2. Procédé suivant la revendication 1, **caractérisé en ce que** l'on produit les décharges glissantes de surface entre deux électrodes qui sont incorporées dans une matière filtrante diélectrique de petite conductivité électrique.

3. Procédé suivant la revendication 1 ou la revendication 2, **caractérisé en ce que** l'on produit les décharges glissantes de surface entre une électrode qui est incorporée à une matière filtrante diélectrique de petite conductivité électrique et une contre-électrode qui est mise sur la surface du filtre tournée vers les gaz d'échappement affluant.

4. Procédé suivant la revendication 2 ou la revendication 3, **caractérisé en ce que** l'on conçoit la matière filtrante en tant que barrière diélectrique et **en ce que** l'on produit les décharges glissantes de surface entre, respectivement, une électrode qui est mise sur la surface du filtre tournée vers les gaz d'échappement affluant et une contre-électrode qui est mise sur la surface du filtre du côté de la sortie.

5. Procédé suivant la revendication 4, **caractérisé en ce que** l'on effectue l'excitation électrique pour la décharge glissante de surface par une tension alternative ou par une tension pulsée périodique ayant de préférence une amplitude comprise entre 3 kV et 20 kV (pk-to-pk) et une fréquence/taux de répétition des impulsions comprise entre 100 Hz et 200 kHz, la régulation de la puissance électrique s'effectuant par adaptation de l'amplitude et de la fréquence.

6. Procédé suivant la revendication 5, **caractérisé en ce que** l'on règle l'amplitude en fonction du quotient pᵢₙ/T_{gaz} de la pression pᵢₙ à l'entrée dans le filtre et de la température T_{gaz}.

7. Procédé suivant la revendication 5, **caractérisé en ce que** l'on choisit la fréquence en fonction de l'occupation m_{particule} du filtre et de la température T_{filtre} du filtre.

8. Procédé suivant la revendication 7, **caractérisé en ce que** l'on détermine l'occupation m_{particule} du filtre à partir de la perte de charge Δp dans le filtre.

9. Procédé suivant la revendication 1, **caractérisé en ce que** l'on effectue la régénération en continu.

10. Procédé suivant la revendication 9, **caractérisé en ce que** l'on règle la puissance électrique moyenne transformée en les décharges glissantes de surface par la stratégie suivante :
- on part d'une puissance Pₘᵢₙ minimum pour la perte de charge sur le filtre inférieure à une valeur Δp₁ de seuil ;
- si la valeur Δp₁ de seuil est dépassée, on augmente la puissance proportionnellement à l'augmentation de la pression en fonction du temps dp/dt jusqu'à une valeur Pₘₐₓ(pᵢₙ/T_{gaz}) maximum qui dépend de la pression et de la température, pᵢₙ représentant la pression à l'entrée dans le filtre et T_{gaz} la température des gaz ;
- on y maintient la puissance jusqu'à ce que se produise une diminution de la pression jusqu'à la valeur Δp₁ de seuil.

11. Procédé suivant la revendication 1 et 8, **caractérisé en ce qu'**on effectue la régénération de façon cyclique.

12. Procédé suivant la revendication 11, **caractérisé en ce que** l'on règle la puissance électrique moyenne transformée en les décharges glissantes de surface par la stratégie suivante :
- on part d'une valeur 0 de puissance pour une perte de charge sur le filtre inférieure à une valeur Δp₁ de seuil ;
- si la valeur Δp₁ de seuil est dépassée, on augmente la puissance proportionnellement à l'augmentation de la pression en fonction du temps dp/dt et cela jusqu'à la valeur Pₘₐₓ(pᵢₙ/T_{gaz}) maximum qui dépend de la pression et de la température, pᵢₙ étant la pression à l'entrée dans le filtre et T_{gaz} étant la température des gaz ;
- on y maintient la puissance jusqu'à ce que la diminution de pression ait lieu jusqu'à la valeur Δp₁ de seuil.

13. Procédé suivant la revendication 1, **caractérisé en ce qu'**après diminution de l'émission des particules par décharges non thermiques dans un gaz, on transforme du côté de la sortie du filtre de particules du monoxyde d'azote (NO) en dioxyde d'azote (NO₂) et on effectue ensuite une réduction catalytique des oxydes d'azote.

14. Procédé suivant la revendication 13, **caractérisé en ce que** l'on ajoute l'agent réducteur nécessaire à la réduction catalytique en aval du filtre de particules et en amont du pot catalytique de réduction.

15. Dispositif de mise en oeuvre du procédé suivant la revendication 1 ou l'une des revendications 2 à 12 comprenant un filtre (50, 60, 70, 90, 200) à flux passant à travers une paroi et des moyens (3, 5, 7, 8, 9, 81, 82, 216, 217) d'oxydation des particules déposées sur le filtre en céramique, **caractérisé en ce que** les moyens (3, 5, 7, 8, 9, 81, 82, 216, 217) d'oxydation des particules donnent des décharges glissantes électriques de surface sur la céramique 6 du filtre (50, 70, 80, 90, 200) occupée par des particules.

16. Dispositif suivant la revendication 15, **caractérisé en ce que** pour obtenir les décharges glissantes électriques de surface, il y a des structures d'électrodes constituées d'électrodes (3, 7, 81, 216) et de contre-électrodes (5, 8, 82, 217) qui sont intégrées au moins en partie au filtre (50, 70, 80, 90, 200).

17. Dispositif pour effectuer le procédé suivant la revendication 13 ou la revendication 14 comprenant un filtre (50, 70, 80, 90, 200) à suie en céramique et des moyens (3, 5, 7, 8, 9, 81, 82, 216, 217) d'oxydation des particules déposées sur le filtre (50, 70, 80, 90, 200) en céramique, des moyens (3, 5, 7, 8, 9, 81, 82, 216, 217) d'oxydation de substances polluantes gazeuses, des moyens (241) d'addition de manière dosée d'un agent (242) réducteur dans le courant des gaz d'échappement et des moyens (250) de réduction catalytique d'oxydes d'azote, **caractérisé en ce que** les moyens (3, 5, 7, 8, 9, 81, 82, 216, 217) d'oxydation des particules donnent des décharges glissantes électriques de surface sur le céramique (6) du filtre (50, 70, 80, 90, 200) et les moyens (3, 5, 7, 8, 9, 81, 82, 216, 217) d'oxydation des substances polluantes gazeuses donnent des décharges rendues incomplètes par voie diélectrique dans le volume du côté de la sortie du filtre (50, 70, 80, 90, 200).

18. Dispositif suivant la revendication 17, **caractérisé en ce que**, pour donner les décharges glissantes de surface et les décharges rendues incomplètes par voie diélectrique, il y a des structures d'électrodes constituées d'électrodes (3, 7, 81, 216) et de contre-électrodes (5, 8, 82, 217) qui sont intégrées au moins en partie au filtre (50, 70, 80, 90, 200).

19. Dispositif suivant la revendication 16 ou la revendication 18, **caractérisé en ce que**, parmi les structures (3, 7, 81, 216) d'électrodes, au moins, respectivement, l'une des électrodes est intégrée à la céramique (6) du filtre (50, 70, 80, 90, 200).

20. Dispositif suivant la revendication 16 ou la revendication 18, **caractérisé en ce que** les électrodes (3, 7, 81, 216) sont intégrées à la céramique (6) et les contre-électrodes (5, 8, 82, 217) sont appliquées à la céramique (6).

21. Dispositif suivant la revendication 15 ou la revendication 17, **caractérisé en ce que** le filtre (50, 70, 80, 90, 200) est constitué de cellules de section transversale rectangulaire rassemblées en nids d'abeille qui sont fermées en alternance aux extrémités, les cellules étant ainsi ouvertes soit vers l'entrée des gaz d'échappement soit vers la sortie du filtre.

22. Dispositif suivant la revendication 21, **caractérisé en ce que** les cellules de la structure en nids d'abeille sont disposées en rangées, des rangées voisines étant décalées mutuellement de, respectivement, la demi-largeur d'une cellule.

23. Dispositif suivant la revendication 15 ou la revendication 17, **caractérisé en ce que** le filtre (50, 70, 80, 90, 200) est en céramique poreuse constituée de cordiérite, de carbure de silicium (SiC) ou de NZP (NaZr₂P₃O₁₂) avec des additifs de réglage des propriétés électriques, notamment de la conductivité, et pour l'oxydation catalytique de la suie.

24. Dispositif suivant la revendication 16 ou la revendication 18, **caractérisé en ce que** les structures d'électrodes comprennent des électrodes (3, 5, 7, 8, 81, 82, 216, 217) métalliques à revêtement diélectrique.

25. Dispositif suivant la revendication 16 ou la revendication 18, **caractérisé en ce que** les structures (3, 5, 7, 8, 81, 82, 216, 217) d'électrodes sont formées par de la matière filtrante de plus grande conductivité.

26. Dispositif suivant la revendication 15, **caractérisé en ce qu'**il est prévu une source (210) de tension pulsée ayant une amplitude de tension et un taux de répétition des impulsions variable pour alimenter les décharges glissantes de surface, des capteurs (222, 223, 224, 225) de mesure des températures et des pressions en amont et en aval du filtre (50, 70, 80, 90, 200) et une commande (220) ayant des entrées pour les signaux de mesure de la température et de la pression et des courbes caractéristiques de régulation mémorisées dans des mémoires non volatiles pour réguler les amplitudes de tension et les taux de répétition d'impulsions en fonction des températures et des pressions.

27. Dispositif suivant la revendication 17, **caractérisé en ce qu'**il y a ce qu'une source (210) de tension pulsée ayant des amplitudes de tension et des taux de répétition d'impulsions réglables pour alimenter les décharges glissantes de surface et les décharges rendues incomplètes par voie diélectrique, des capteurs (222, 223, 224, 225) de mesure des températures et des pressions en amont et en aval du filtre (50, 70, 80, 90, 200), des moyens de détermination de la concentration en NO des gaz d'échappement et une commande (220) ayant des entrées pour les signaux de mesure de la température et de la pression ainsi que des informations de la concentration en NO et des courbes caractéristiques de régulation mémorisées dans des mémoires non volatiles pour la régulation des amplitudes de tension et des taux de répétition d'impulsions en fonction des températures, des pressions et de la concentration en NO.

28. Dispositif suivant la revendication 15 ou la revendication 17, **caractérisé par** des moyens (213) pour assurer la sécurité de fonctionnement et la compatibilité électromagnétique des moyens (212) fonctionnant en haute tension (211) de production des décharges glissantes de surface.

29. Dispositif suivant la revendication 28, **caractérisé en ce qu'**il y a un boîtier (200, 214) en un matériau de grande conductivité électrique comprise entre 5 Sm/mm² et 65 Sm/mm² comme enveloppe (214) de filtre pour l'élément filtrant à plasma.

30. Dispositif suivant la revendication 29, **caractérisé en ce que** l'élément (212) filtrant à plasma est isolé par une matière (213) isolante thermiquement et électriquement d'une épaisseur comprise entre 1 mm et 1 cm vis-à-vis de l'enveloppe (214) du filtre.

31. Dispositif suivant la revendication 30, **caractérisé en ce que** la haute tension est guidée par une traversée (215) de grande rigidité diélectrique du côté de la sortie de l'élément (212) de filtre à plasma à travers l'enveloppe (214) de filtre et est envoyée par une surface de contact du côté de la sortie de l'élément (212) de filtre à plasma aux électrodes à haute tension.

32. Dispositif suivant la revendication 31, **caractérisé en ce que** les contre-électrodes (217), servant de masses, de l'élément (212) de filtre à plasma sont contactées par leur surface frontale du côté de l'entrée et sont reliées à l'enveloppe (214) du filtre en tant que masses extérieures.

33. Dispositif suivant la revendication 30, **caractérisé en ce qu'**il est envoyé en tant que haute tension au filtre (200) de l'extérieur le câble (211) coaxial résistant à une température allant jusqu'à 200°C par le choix de la matière (213) isolante thermiquement et électriquement, câble dont le conducteur intérieur est raccordé à la traversée (215) de haute tension et dont le conducteur extérieur est relié à l'enveloppe (214) du filtre.

34. Dispositif suivant la revendication 30, **caractérisé en ce que** l'on utilise comme matière (213) thermiquement et électriquement isolante de la céramique frittée de manière dense à base d'oxyde d'aluminium (Al₂O₃), de nitrure d'aluminium (AlN), de dioxyde de zirconium (ZrO₂), de nitrure de bore (BN), de cordiérite, etc. ayant une épaisseur de paroi de 0,5 mm à 10 mm qui fait saillie à l'intérieur et à l'extérieur de l'enveloppe (214) de filtre d'au moins 5 mm et jusqu'à 50 mm au-delà de la paroi métallique de l'enveloppe (214) du filtre.

35. Dispositif suivant la revendication 33 ou la revendication 34, **caractérisé en ce que** les électrodes (216) ou les contre-électrodes (217) ont une résistance électrique spécifique qui limite le courant par canal dans le cas d'un claquage électrique de la matière (212) du filtre.

36. Dispositif suivant la revendication 35, **caractérisé en ce que** le courant est limité à 10 fois le courant normal.

37. Dispositif suivant la revendication 35, **caractérisé en ce que** tant les électrodes (216) qu'également les contre-électrodes (217) ont la même résistance électrique spécifique.

38. Dispositif suivant la revendication 35, **caractérisé en ce que** la résistance électrique spécifique est comprise entre 100 Ω/cm de longueur d'électrode et 100 kΩ/cm de longueur d'électrode.

39. Dispositif suivant la revendication 38, **caractérisé en ce que** la résistance électrique spécifique est comprise entre 1 kΩ/cm de longueur d'électrode et 10 kΩ/cm de longueur d'électrode.
